(19) Europäisches Patentamt
European Patent Office
Office européen des brevets

(11) **EP 2 795 156 B1**

(12) **EUROPEAN PATENT SPECIFICATION**

(45) Date of publication and mention
of the grant of the patent:
**15.04.2020 Bulletin 2020/16**

(21) Application number: **12823221.2**

(22) Date of filing: **24.12.2012**

(51) Int Cl.:
***F16G 5/16*** (2006.01)

(86) International application number:
**PCT/NL2012/000082**

(87) International publication number:
**WO 2013/095089 (27.06.2013 Gazette 2013/26)**

(54) **FLEXIBLE STEEL RING AND DRIVE BELT PROVIDED WITH A LAMINATED SET OF SUCH RINGS**

FLEXIBLER STAHLRING UND TREIBRIEMEN MIT EINEM LAMINIERTEN SATZ SOLCHER RINGE

BAGUE D'ACIER SOUPLE ET COURROIE D'ENTRAÎNEMENT COMPORTANT UN ENSEMBLE STRATIFIÉ DE TELLES BAGUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2011 NL 1039261**

(43) Date of publication of application:
**29.10.2014 Bulletin 2014/44**

(73) Proprietor: **Robert Bosch GmbH**
**70442 Stuttgart (DE)**

(72) Inventor: **VAN DER MEER, Cornelis, Johannes, Maria**
**NL-5032 XG Tilburg (NL)**

(74) Representative: **Plevier, Gabriël Anton Johan Maria**
**Bosch Transmission Technology B.V.**
**IP section (GS-CT/NE)**
**postbus 500**
**5000 AM Tilburg (NL)**

(56) References cited:
**EP-A1- 1 176 224        EP-A1- 1 243 812**
**WO-A1-2011/043648     WO-A1-2011/076397**
**JP-A- 2007 255 496**

**Description**

The present invention relates to a drive belt for use in the well-known pulley-type continuously variable transmission or CVT that is typically applied in motor vehicles. One well known type of drive belt is described in detail in EP-A-1 403 551 and is also referred to in the art as push belt. The known drive belt includes a multitude of steel segments that are provided with at least one, but typically two recesses, each recess accommodating a set of a number of mutually, concentrically nested flexible steel rings of the drive belt. In the art, the steel segments are also referred as transverse elements, the rings as hoops or endless bands and the laminated set of rings as endless tensile means or carrier. In the present type drive belt the transverse elements are not connected to the endless carrier, but rather slide along the circumference thereof during operation in the CVT. Also the individual rings of the endless carrier slide relative to one another during operation.

For the present drive belt application thereof, a ring is produced from maraging steel, which type of steel combines a comparatively favourable possibility to weld and plastically deform the material with the characteristics of great tensile strength and good resistance against both abrasive wear and bending and/or tensile stress fatigue, at least after the appropriate heat treatment thereof. The known rings are provided with a fair hardness of the core material for realising the properties of good tensile, yield and bending strength combined with a high resistance against metal fatigue, which ring core is encased in a substantially harder and thus wear resistant outer surface layer of the ring material. A thickness of the said hard surface layer is carefully controlled in manufacturing to limit the internal ring stress and to provide the ring with a sufficient elasticity to allow longitudinal bending as well as resistance against fatigue fracture.

The basics of the known manufacturing method for such rings have become well known in the art. In particular, i.e. for creating the aforementioned hard surface layer, the known ring manufacturing method includes at least the process step of nitriding the ring material, typically of gas soft nitriding, i.e. of keeping the ring material in an atmosphere containing ammonia gas at a temperature of about 450 °C. In the nitriding process, nitrogen atoms diffuse into the surface layer of the ring to form a nitrogen containing surface layer of increased hardness. The nitrogen diffusion depth, i.e. the thickness of such nitrided surface layer or nitride layer depends on several parameters of the nitriding process such as the ammonia concentration at the ring surface and the process temperature and duration.

In the art, it is a generally accepted principle that a thickness of the nitride layer is to be carefully controlled in manufacturing in order to provide the ring with a sufficient elasticity to allow longitudinal bending as well as resistance against fatigue fracture, while at the same time limit the stress occurring in the ring due to a bending thereof. These features are of course highly significant in the pushbelt application of the rings, because of the numerous load and bending cycles it is subjected to during its service life.

Specifically in relation to the thickness layer of such nitride layer several prior art sources are available. For example of the Japanese patent publication JP2000-337453 (A) mentions that a total thickness of the nitride layer (i.e. as summated for both sides of the ring) of 20 to 40% of the ring thickness represents the optimum thickness for the drive belt application of the ring. However, both thinner and thicker nitride layers are known as well. Indeed, the United States patent US 4,698,050 B1 discloses a very broad range in this respect teaching that a nitride layer (i.e. as present on one side of the ring) should be between 0.5 and 30 micron thick, at least in relation to rings having a total thickness between 100 and 200 micron. In practice, a single sided nitride layer thickness of about 35 micron is applied to a ring having an overall thickness of about 185 to 195 μm, such that the total, i.e. two sided, thickness of the nitride layers amounts to approximately 36 to 38% of the overall ring thickness.

Inter alia, it is noted that, in the context of the present application, the thickness of the nitride layer is determined optically (with the aid of a microscope) on a polished and suitably etched cross-sectional surface of the ring.

From the above, it may thus be concluded that according to the known art no one single, optimum value for the thickness of the nitride layer of a steel ring solely in relation to the intended application thereof in the endless carrier of the CVT drive belt exists, neither in absolute nor in relative terms. Rather, such optimum nitride layer thickness is expected to depend on several design aspects of the ring itself and of the drive belt and CVT wherein the ring is (to be) applied, however in a largely unknown and non-quantified manner. The present invention aims to, at least partially, fill-in such knowledge gap and, thereby, to open up a way to (further) reduce the stress levels in the ring during use of the drive belt wherein the ring is applied in the CVT, and, thus, to improve the service life of such drive belt as a whole. According to the invention such aim is realised by the drive belt incorporating the features of Claim 1 hereinafter.

According the invention there was found a dominant correlation between the thickness of the nitride layer of a ring that provides the highest fatigue strength to such ring and the overall thickness of the ring. Thus, when a certain application of the drive belt requires a certain thickness of the ring nitride layer, an optimum overall ring thickness can be related thereto in accordance with the invention. Conversely, when a certain overall ring thickness is applied, the invention provides the optimum nitride layer thickness for such ring.

In this latter respect it is, for instance, referred to the Japanese patent publication JP62-028548 (A), the United States patent US 6,217,472 B1 and the European patent publications EP 0 989 325 A2 and 1 085 235 A1, which documents concern the optimum value for the ring thickness, in particular as differentiated according to the respective nesting position of such ring in the laminated set of rings that forms the endless carrier of the drive belt. JP2007255496A discloses a drive belt having several flexible steel rings mutually stacked and each having different thickness dimension. EP1176224A discloses a flexible steel ring for a drive belt according to the preamble of claim1. According to present invention, the optimum nitride layer thickness of such rings of varying thickness varies as well.

The above-described combination of the (overall) thickness of the ring and the thickness of the (single ring side) nitride layer in accordance with the invention is be approximated by the following equation:

$$D = 6 * T \tag{1}$$

with

- D representing the thickness of the ring, and
- T representing the thickness of the (single ring side) nitride layer.

Although the equation (1) provides the theoretical optimum for the said combination of parameters, in practice good results are obtained within a tolerance of 5% as per the following equation:

$$D = (6.0 \pm 0.3) * T \tag{2}$$

The invention will now be elucidated by way of example, along a drawing in which:

figure 1 provides a schematically depicted example of the well-known continuously variable transmission provided with a drive belt,
figure 2 is a section of the drive belt shown in perspective,
figure 3 is a schematic cross-section of an endless carrier of the drive belt and
figure 4 is a graph providing the relationship as prescribed by the present invention.

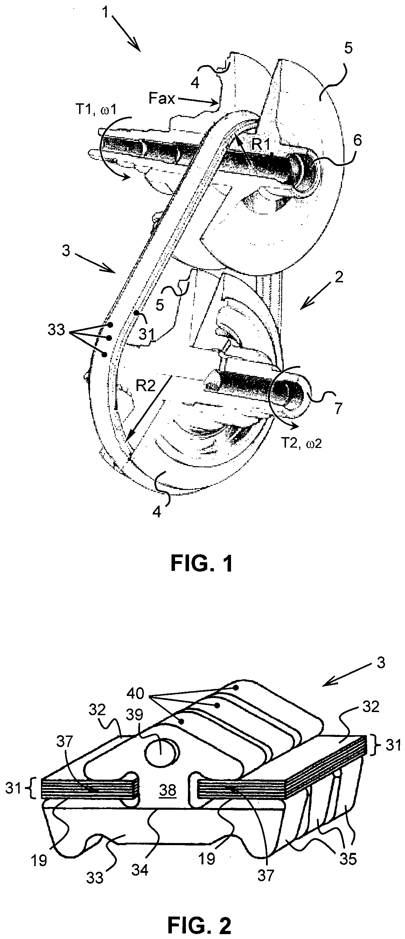

Figure 1 shows the central parts of a known continuously variable transmission or CVT that is commonly applied in the drive line of motor vehicles between the engine and the drive wheels thereof. The transmission comprises two pulleys 1, 2, each provided with two conical pulley discs 4, 5, where between a predominantly V-shaped pulley groove is defined and whereof one disc 4 is axially moveable along a respective pulley shaft 6, 7 over which it is placed. A drive belt 3 is wrapped around the pulleys 1, 2 for transmitting a rotational movement $\omega$ and an accompanying torque T from the one pulley 1, 2 to the other 2, 1. The transmission generally also comprises activation means that impose on the said at least one disc 4 an axially oriented clamping force Fax directed towards the respective other pulley disc 5 such that the belt 3 is clamped there between. Also, a (speed) ratio of the transmission between the rotational speed of the driven pulley 2 and the rotational speed of the driving pulley 1 is determined thereby.

An example of a known drive belt 3 is shown in more detail figure 2 in a section thereof, which belt 3 incorporates an endless carrier 31. The endless carrier 31 is shown only in part and -in this example- is composed of two sets of thin and flat, i.e. band-like, flexible steel rings 32. The drive belt 3 further comprises a multitude of plate-like transverse elements 33 that are held together by the endless carrier 31 that is located in a recess 37 of the transverse elements 33. The transverse elements 33 take-up the said clamping force Fax, such when an input torque Tin is exerted on the so-called driving pulley 1, friction between the discs 4, 5 and the belt 3, causes a rotation of the driving pulley 1 to be transferred to the so-called driven pulley 2 via the likewise rotating drive belt 3.

During operation in the CVT the drive belt 3 and in particular the rings 32 thereof are subjected to a cyclically varying tensile and bending stresses, i.e. a fatigue load. Typically the resistance against metal fatigue, i.e. the fatigue strength of the rings 32 thus determines the functional life span of the drive belt 3 at a given torque T to be transmitted thereby. Therefore, it has been a long standing general aim in the development of the drive belt manufacturing method to realise a required ring fatigue strength at a minimum combined material and processing cost.

In the known manufacturing method for the drive belt ring component 32, such required fatigue strength is a/o realised by the heat treatment of case hardening by nitriding, in particular gas-soft nitriding. More in particular, such nitriding heat-treatment involves heating the ring 32 in a controlled gas mixture of nitrogen and ammonia. In this respect it is noted that, typically, it is aimed at a surface hardness of the ring 32 of 875 HV0.1 or more and at a thickness of the nitrided surface layer, i.e. the nitrogen diffusion zone, or simply the nitride layer for short, of 18% of the total thickness of the ring 32. From a number of thus treated rings 32, the endless carrier 31 is build-up by radially stacking, i.e. nesting, these.

**EP 2 795 156 B1**

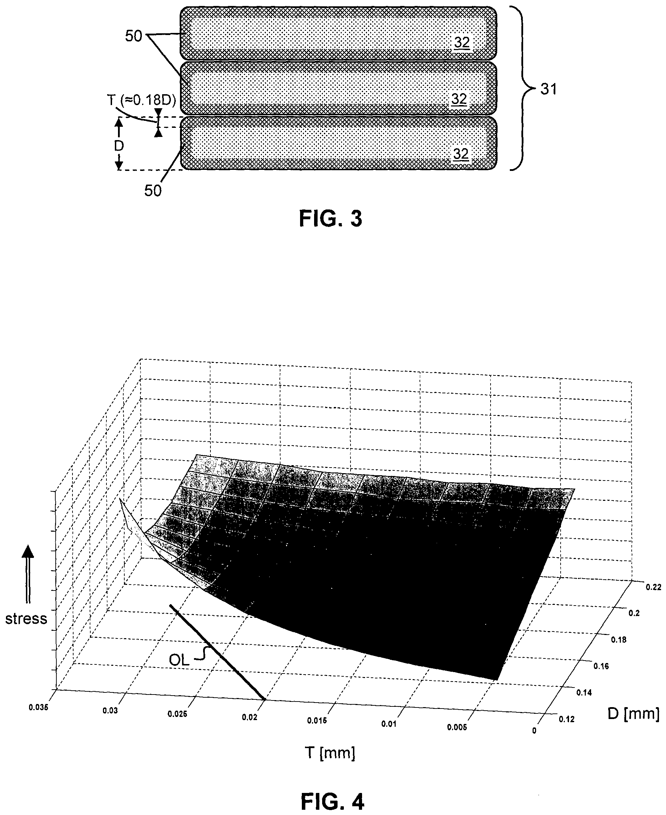

Figure 3 represents a greatly enlarged and, moreover, schematically drawn cross-section of the endless carrier 31 that, in this example, comprises three rings 32. It is noted that in practice, 6 to 12 rings 32 are typically applied in a single carrier 31. Figure 3 illustrates the feature of the nitride layer 50 (by the darker grey tone) of the rings 32 thereof and the thickness T of such nitride layer 50 (as measured in the radial direction of the ring 32) relative to the thickness D of a respective ring 32 (as likewise measured in the radial direction). In the illustrative example of figure 3 the thickness T of the nitride layer 50 (as present at one side of the ring 32) amounts to 18% of the (overall) thickness D of the respective ring 32, such that the total thickness of the nitride layers 50 (i.e. as summated for both sides of the ring 32) amounts to 36% of such ring thickness D in accordance with the prior art. In accordance with the prior art, a wide range of nitride layer thickness is taught to be suitable for any given ring design or ring thickness D in particular, apparently without a certain value or sub-range of such nitride layer thickness providing advantageous characteristics.

According to the invention, to the contrary, a dependency was found to exist between the parameters of ring thickness D and nitride layer thickness T in terms of the fatigue strength of the ring 32 concerned, whereby such fatigue strength shows a maximum at a certain combination of values of the said parameters. Indeed, according to the invention and for a particular application of the drive belt 3, a (calculated) maximum stress occurring in a ring 32 is plotted in figure 4 in relation to the thickness D of such ring 32 and the thickness T of the nitride layer 50 of (i.e. provided to) such ring 32. The line OL in the graph of figure 4 combines each ring thickness D value to a specific nitride layer thickness T value (and vice versa) that yields the lowest possible bending stress level for a respective ring 32 during operation of the drive belt 3. This line OL of figure 4 thus represents the optimum pairing of the ring thickness D and the nitride layer thickness T in terms of the fatigue strength of a respective ring 32. Mathematically, the line OL can be approximated by the equation (1) hereinabove.

It is noted that in practice several additional parameters determine the maximum bending stress level that occurs in a respective ring 32 during operation of the drive belt 3, which additional parameters to a certain extend also influence the dependency between the ring thickness D and the nitride layer thickness T as per figure 4 and possibly even the aid optimum pairing OL thereof. However, according to the present invention, such influence is negligible small, because these additional parameters either vary only little between the known applications of the drive belt 3 and/or have only little impact on the said dependency. Examples of such additional, however disregarded parameters are:

- a minimum bending radius applied to the ring (32),
- a modulus of elasticity of the material wherefrom the ring (32) is made, and
- a width or breadth of the ring (32).

The invention, apart from the preceding description and all details of the drawing that may not be described, however immediately and unambiguously evident to a person skilled in the art, further relates to all details of the following set of claims.

**Claims**

1.  Flexible steel ring (32) for a drive belt (3) with a number of transverse elements, (33) that are slidably provided on an endless carrier (31), which endless carrier (31) encompasses a number of such flexible steel rings (32) that are mutually stacked, which ring (32) is provided with a nitrided surface layer (50) at or near an outer surface thereof, **characterized in that** a thickness dimension D of the ring (32), as measured in a radial direction, is tailored to a thickness dimension T of the nitrided surface layer (50), as likewise measured in the radial direction, and satisfies the equation: D = 6.0 * T.

2.  The flexible steel ring (32) according to the claim 1, **characterized in that** a thickness dimension D of the ring (32) either is less than 185 microns, or is more than 195 microns.

3.  Drive belt (3) with a number of transverse elements, (33) that are slidably provided on an endless carrier (31), which endless carrier (31) encompasses a number of mutually stacked, flexible steel rings (32) according to the claim 1 or 2.

**Patentansprüche**

1.  Flexibler Stahlring (32) für einen Treibriemen (3) mit mehreren Querelementen (33), die verschiebbar auf einem Endlosträger (31) vorgesehen sind, wobei der Endlosträger (31) mehrere solche flexiblen Stahlringe (32), die übereinander gestapelt sind, umfasst, wobei der Ring (32) an oder nahe einer Außenfläche davon mit einer nitrierten Oberflächenschicht (50) versehen ist, **dadurch gekennzeichnet, dass** eine Dickenabmessung D des Rings (32),

4

in einer Radialrichtung gemessen, auf eine Dickenabmessung T der nitrierten Oberflächenschicht (50), ebenfalls in der Radialrichtung gemessen, zugeschnitten ist und die Gleichung: D = 6,0 * T erfüllt.

2. Flexibler Stahlring (32) nach Anspruch 1, **dadurch gekennzeichnet, dass** eine Dickenabmessung D des Rings (32) entweder weniger als 185 Mikrometer oder mehr als 195 Mikrometer beträgt.

3. Treibriemen (3) mit mehreren Querelementen (33), die verschiebbar auf einem Endlosträger (31) vorgesehen ist, wobei der Endlosträger (31) mehrere übereinander gestapelte flexible Stahlringe (32) nach Anspruch 1 oder 2 umfasst.


**Revendications**

1. Bague d'acier souple (32) pour une courroie d'entraînement (3) comprenant un certain nombre d'éléments transversaux (33) qui sont prévus de manière à pouvoir coulisser sur un support sans fin (31), lequel support sans fin (31) comprend un certain nombre de bagues d'acier souples (32) de ce type qui sont empilées les unes sur les autres, laquelle bague (32) est pourvue d'une couche de surface nitrurée (50) au niveau ou à proximité d'une surface extérieure de celle-ci, **caractérisée en ce qu'**une dimension en épaisseur D de la bague (32), mesurée dans une direction radiale, est adaptée à une dimension en épaisseur T de la couche de surface nitrurée (50), également mesurée dans la direction radiale, et satisfait à l'équation : D = 6,0*T.

2. Bague d'acier souple (32) selon la revendication 1, **caractérisée en ce qu'**une dimension en épaisseur D de la bague (32) est soit inférieure à 185 microns soit supérieure à 195 microns.

3. Courroie d'entraînement (3) comprenant un certain nombre d'éléments transversaux (33) qui sont prévus de manière à pouvoir coulisser sur un support sans fin (31), lequel support sans fin (31) comprend un certain nombre de bagues d'acier souples (32) empilées les unes sur les autres selon la revendication 1 ou 2.

**FIG. 1**

**FIG. 2**

**FIG. 3**

stress

OL

T [mm]

D [mm]

0.22
0.2
0.18
0.16
0.14
0.12

0.035  0.03  0.025  0.02  0.015  0.01  0.005  0

**FIG. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1403551 A
- JP 2000337453 A
- US 4698050 B1
- JP 62028548 A
- US 6217472 B1
- EP 0989325 A2
- EP 1085235 A1
- JP 2007255496 A
- EP 1176224 A